# EUROPEAN PATENT APPLICATION

(11) **EP 4 817 846 A1**
(43) Date of publication of application: **07.10.2026**
(21) Application number: 25168178.9
(22) Date of filing: 03.04.2025
(51) Int. Cl.: B29C 51/26, B29C 51/42, B29C 70/34, B29C 53/04, B29C 70/54, B29C 70/56, B29C 51/08, B29C 51/46, B29C 35/02, B29C 33/02, B29C 51/30

(54) **METHOD AND APPARATUS FOR THERMOPLASTIC FIBER LAMINATES FORMING**

(71) Applicant: Aernnova Aerospace, 01510 Miñano (ES); Aernnova Composites Illescas, 42500 Illescas Toledo (ES)
(72) Inventor: Vázquez Brea, Pedro, 42500 Illescas (ES); Sánchez Moreno, Alejandro, 42500 Illescas (ES); Sánchez Martín, Enrique, 42500 Illescas (ES)

(57) **Abstract**

A process for thermoforming substantially flat composite laminates made up of thermoplastic resin with reinforcing fibers. The process is characterized by the thermoplastic laminate being maintained under tension while it is being formed on a mold, and ironing devices are used to compact the laminate while it is being formed on the mold surface. A protective film is previously added to one of the faces of the laminate to protect it while the ironing devices slide on it during the thermoforming process.

The invention also includes an apparatus configured to perform the described process.

## Description

### TECHNICAL FIELD OF THE INVENTION

The present invention relates to the field of manufacturing fiber-reinforced thermoplastic materials.

More specifically, it relates to the manufacturing of products made up of fiber-reinforced thermoplastic materials by forming substantially flat laminates.

### BACKGROUND OF THE INVENTION

In the field of composite parts manufacturing, the use of hot-forming processes to obtain beam-like products departing from a substantially flat laminate is a well-known process that is commonly used not only for composites based on thermoplastic resins, but also for those based on thermoset resins, prior to the resin curing cycle.

In these common processes, usually the whole flat laminate is previously heated until the temperature reaches the level of binder activation (in case of thermosets) or the resin melting temperature (in case of thermoplastic), allowing the flat laminate to be adapted to its final three-dimensional shape on a forming tool.

In the specific case of fiber-reinforced thermoplastics, during this forming process the resin is fluid enough to internally flow through the fibers, a process favored by capillarity. The first effect of this phenomenon is the "inflation" of the laminate, with the resin accumulating in the inside of the laminate and leaving the external fibers somewhat dry, and the laminate gaining "sponginess".

The way to avoid this effect when forming thermoplastic laminates is to apply external pressure while the laminate is being formed. This is why the manufacturing process of forming fiber-reinforced thermoplastic laminates is usually performed in a closed mold or in a press.

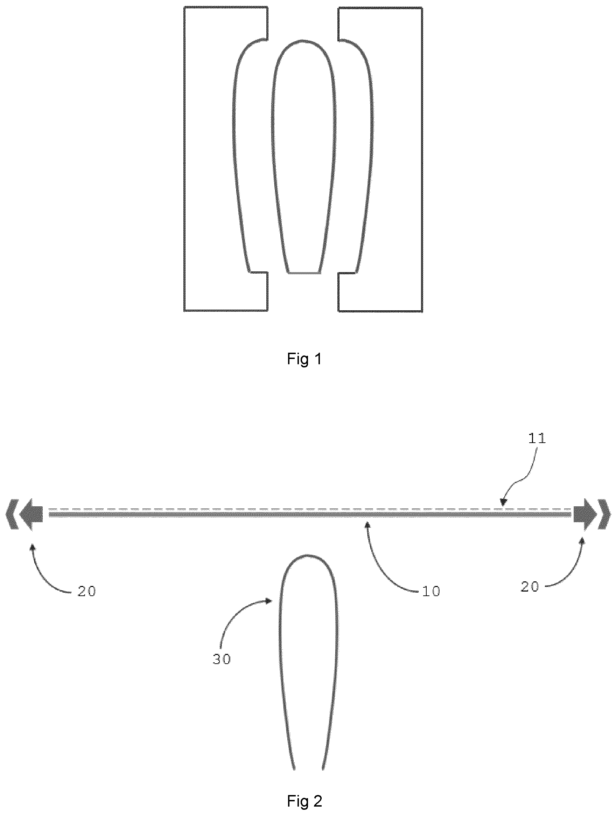

Although the quality of the parts manufactured this way, in closed molds or presses, is usually good, the problem arises when the geometry of the part is such that it includes "negative angles" in the closing direction of the mold or the press, making the process difficult and forcing the forming process to be carried out in several steps and generally with molds divided into several parts (Fig 1). This makes the manufacturing process more expensive and slower. Moreover, the need to use external molds divided into several parts usually leaves small marks in the surface of the part, in the lines between adjacent molds, marks that may be considered at least as cosmetical defects.

An alternative to the use of closed molds is the use of vacuum bags. This is a well-known process usually used for compacting and later curing thermoset laminates, but that can be also applicable to thermoplastic laminates. However, the need to use bags able to withstand the higher temperatures used for thermoplastics, and the cumbersome process of preparing the bag, makes this option a far from optimal solution.

Other alternatives have explored the possibility of using rollers to compact the thermoplastic laminate against the mold during the forming process. US11338497B2 describes a method for thermoforming thermoplastic components that may include fibers by using a series of rollers to compact the thermoplastic component against a rotating mandrel. An evident alternative to the use of fixed rollers and a rotating mandrel is the use of a fixed mandrel and movable rollers that compact the component against the mandrel.

However, this solution also has some drawbacks. The main problem when using rollers is that their use is frequently limited to parts with a ruled geometry, and better for not very long parts. If the geometry of the part in contact with the mold or mandrel is not a ruled surface or close to it, it will be difficult for the rollers to adapt themselves to that geometry.

The use of rollers for very long parts, and also for the case of non-ruled surfaces, may lead to the use of multiple rollers instead of continuous rollers along the part length. The use of short rollers facilitates the adaptation of the rollers pressure to the changing curvature of the part along its length, but introduces a new problem: the appearance of slight lines of discontinuity on the part, in the zones between rollers. Even in the case that these lines are only considered as a cosmetic defect, they can be a problem for parts where appearance is important. Even overlapping the rollers along the part length, the discontinuity lines usually are still visible in the final part.

The use of rollers can also have other drawbacks, since the use of moving parts subjected to the high temperatures of thermoforming combined with the pressure necessary to guarantee a good compaction of the laminate can cause the rollers to seize, or require the use of special and expensive heavy-duty rollers.

The purpose of the present invention is to introduce an alternative manufacturing process and the associated apparatus for forming fiber-reinforced laminates by applying pressure during the forming process and avoiding the use of closed molds or presses, and also solving the problems existing with current methods, to obtain a defect-free part and accelerating the manufacturing process.

### DESCRIPTION OF THE INVENTION

The present invention relates to a process, and the associated apparatus, to conform a substantially flat laminate of fiber-reinforced thermoplastic material on a male mold. The invention has special interest for the manufacturing of elongated parts with high curvature in the transversal plane (normal to the part length) and smooth or no curvature along its length. In the next description of the invention and accompanying drawings an aerodynamic profile (wing, aileron, etc) will be used as reference, although the invention may be applicable to many other geometries and components.

One of the most relevant aspects of this invention is that the laminate is not compressed in a closed mold or compacted against a mold with rollers or similar devices, but rather "ironed" over the surface of the mold, at the same time that the laminate is maintained under tension while it is adapted to the mold surface; the combined effect of the tension and the pressure applied by the "ironing" devices assures a good compaction of the laminate and the absence of wrinkles. To avoid the appearance of defects due to the friction between the ironing devices and the thermoplastic laminate, the laminate is previously covered with a protective film.

Next, a detailed description of the subject of the invention is provided:
Initially, the process starts with a substantially flat laminate of fiber-reinforced thermoplastic material (10). In a first step of the process of the invention, the laminate is covered on one of its faces (the one that will be the outer face of the final part, the face that will not be in contact with the male mold during the forming process) with a peelable protective film (11) that will act as a protective coating for the laminate during the forming process. In a preferred embodiment of the invention, a Kapton film is used, although many other alternative types of films may also be used, as long as they are able to withstand the friction forces acting on the outer face of the laminate during the process at the temperatures of the process.

The laminate is then mounted in a tension assembly (20) that grabs two opposite edges of the laminate along a direction substantially perpendicular to the main plane of curvature of the final part (Fig 2).

In a next step of the process, the laminate is heated until it reaches the melting temperature (Tₘ) of the resin, which is controlled trough appropriate temperature sensors. This heating process is done by means of heating elements that are usually infra-red lamps, although alternative methods could be used (radiators, hot air, direct contact...).

Meanwhile, the male mold (30) against which the laminate will be formed is also heated until its surface reaches at least the glass transition temperature of the thermoplastic resin of the laminate. This temperature on the surface of the mold will be maintained during the forming process. To achieve and maintain this heating, the mold can incorporate internal heating elements, although many alternative methods can be used to heat the mold, with heat applied internally or externally (by radiation, hot-air, pre-heating in an oven, etc).

The mold surface could be heated until reaching the melting temperature of the laminate resin, that is, the same temperature to which the laminate itself has been heated. However, it is enough to heat the mold just above the glass transition temperature of the laminate, below the melting temperature of the laminate resin. This not only saves energy, but also process time, since this shortens the cooling down time.

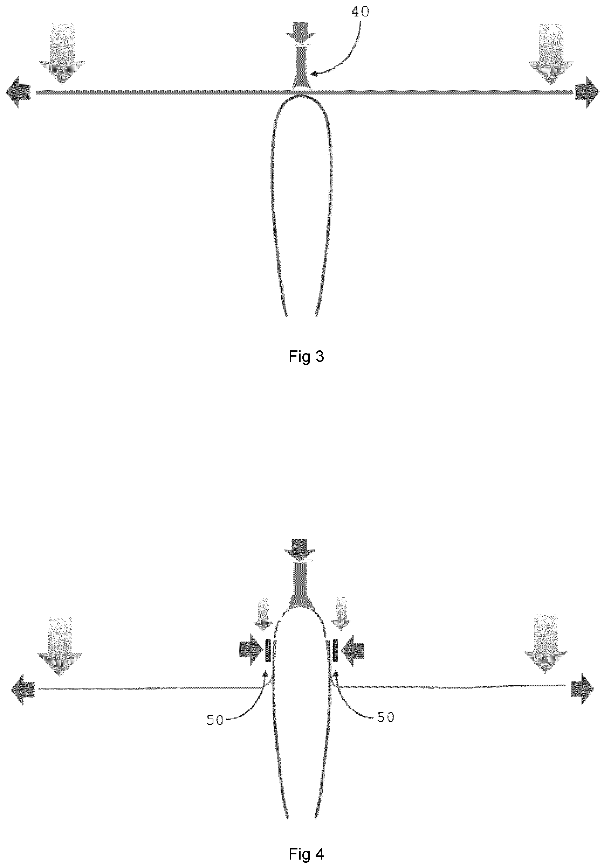

In a next step of the process, the laminate is approached to the male mold against which the laminate will be formed to obtain its final shape. When the first (inner) face of the laminate starts to make contact with the mold, a clamping element (40) is approached to the laminate by its second (outer) face, locally clamping the laminate against the mold to avoid any slippage of the laminate over the surface of the mold during the following forming process (Fig 3).

Next, the forming process starts: the tension assembly that clamps the edges of the laminate moves the laminate against the mold while maintaining the tension. Accompanying the movement of the tension assembly, a series of ironing devices (50) are approximated to the outer face of the laminate, pressing it against the mold with the required pressure to guarantee a proper compaction of the laminate (Fig 4).

The ironing devices are flexible parts that are continuous along all the length of the part. The ironing devices may be manufactured in different alternative materials as long as they are flexible enough to adapt to the geometry of the part, able to withstand the forming temperatures, and at the same time not excessively soft, in order to exert the required pressure to the laminate to achieve a good compaction. Some rubbers may be a good option, although thin and flexible metallic strips may be also a good choice for some geometries. Other materials can also be used for these thin and flexible strips, such as some plastics (able to withstand the thermoforming temperatures) or thermoset laminates, among others.

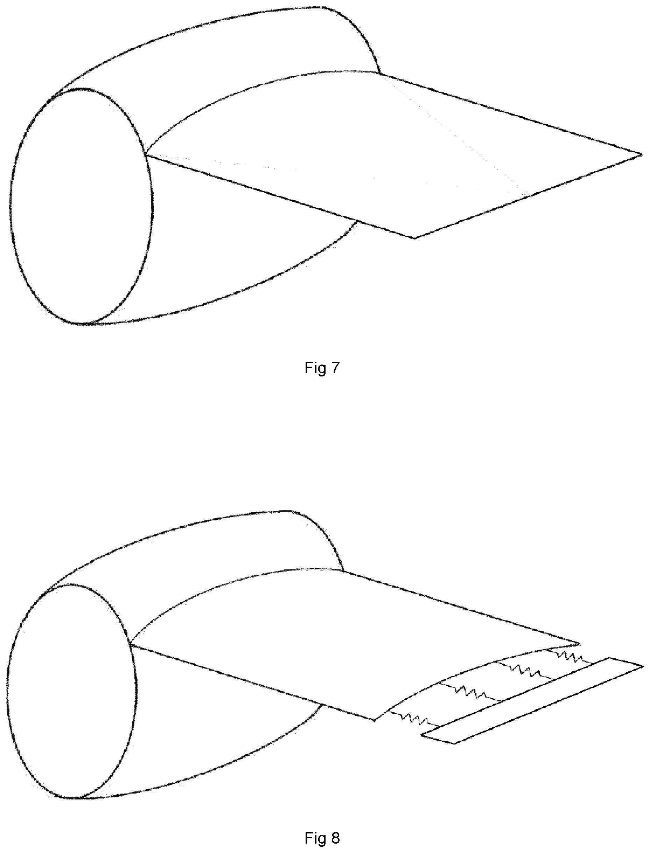

In the case of working with a mold that does not have a ruled surface, it seems that the use of metal strips or similar materials as ironing elements would not adapt to the double curvature of the surface, thus not achieving a good ironing of the laminate. However, this is generally not true: in such cases, the thin, elastic sheet used as an ironing device usually conforms to the surface of the mold along a geodesic line and, if the ironing element is sufficiently thin and elastic, its shape transitions from that geodesic line to the usually straight line where the ironing device is attached to the rest of the forming machine (Fig 7). To improve this behavior and allow the ironing device to adapt more easily to high curvature molds, an intermediate elastic element (such as a rubber coupling) may be included between the ironing element and the rigid attachment to the forming machine, preventing the ironing device from having to transition to a totally flat surface in its attachment, thus allowing a greater degree of freedom to adapt to high-curvature molds (Fig 8).

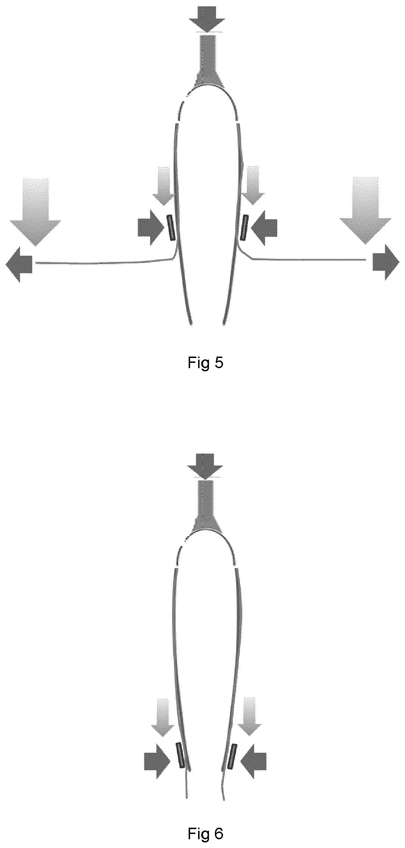

The process follows with the tension assembly moving to pull the laminate against the mold while the ironing devices slide on the outer face of the laminate pressing it against the mold and compacting it as they accompany the movement of the tension assembly to adapt the laminate to the mold surface (Fig 5). The outer protective film added to the outer face of the laminate protects it against the friction of the ironing devices while they are moved along its surface to adapt the laminate against the mold.

The process continues until all the laminate has been adapted to the mold; during the process, the tension assembly maintains the laminate at the proper tension to avoid the appearance of wrinkles while it is being adapted to the mold, and the ironing devices "iron" the laminate against the mold, assuring a good compaction. When all the laminate has been adapted to the mold surface, the tension assembly frees the laminate, unclamping its borders (Fig 6).

Next, the mold starts a cool down process. To speed up the process, the mold can include internal cooling means, such as channels through which a cold fluid circulates. When the laminate achieves a temperature below the glass transition temperature of the thermoplastic resin, the ironing devices (50) are removed and the formed part can be demolded.

In a final step of the process, the outer protective film (11) is removed from the outer face of the formed part.

### BRIEF DESCRIPTION OF DRAWINGS

Present specification is complemented with a set of drawings, illustrative of the preferred example and never limiting the invention. In the drawings, solid shaded arrows indicate forces (tension or pressure), and gradient shaded arrows indicate movement.
Fig 1 shows the configuration of a closed mold to manufacture a part with a shape that imposes the use of a split mold.
Fig 2 shows the flat laminate to be formed, with the protective film already added to its outer face, mounted in the tension assembly, and located above the male mold in the first step of the process.
Fig 3 shows the laminate when it just makes contact with the mold, and it is clamped against it by the clamping element.
Fig 4 shows an intermediate step of the forming process, with the laminate subjected to tension by the tension assembly, which moves to adapt the laminate against the mold, while the ironing devices compact the laminate accompanying the movement of the tension assembly.
Fig 5 shows a next step of the forming process, with the tension assembly and the ironing devices moving further to adapt the laminate against the mold.
Fig 6 shows one of the last steps of the forming process, when all the laminate has been formed against the mold and the ironing devices are reaching the final part of the mold, with the laminate just released by the tension assembly.
Fig 7 schematically shows how a thin and elastic flat sheet may adapt itself to a double-curvature surface following a geodesic line, and with the shape of the sheet transitioning to a straight border away from that surface.
Fig 8 schematically shows the addition of an elastic coupling between an ironing device consisting in a thin sheet that has to adapt to a double curvature mold, and the attachment of the ironing device to the thermoforming machine.

## Claims

1. A process for thermoforming substantially flat composite laminates (10) made up of thermoplastic resin with reinforcing fibers, comprising the steps of locally clamping the laminate between the forming mold (30) and a second element (40), heating the laminate to soften the thermoplastic resin, heating the surface of the mold, and forming the laminate by means of ironing devices (50), and **characterized by**:
• The thermoplastic laminate is first protected in one of its faces with a protective peelable film,
• the thermoplastic laminate is mounted in a tension assembly that maintains the laminate under tension in a direction substantially perpendicular to the main longitudinal direction of the final shape to be obtained in the forming process
• the temperature of the mold surface is maintained above the glass transition temperature of the resin while the laminate is being formed on the mold, and
• the ironing devices slide over the surface of the laminate pressing it against the mold

2. The process according to claim 1 further comprising the step of cooling the surface of the mold in contact with the laminate once the forming operation has been completed and prior to the release of the formed laminate.

3. The process according to any of the claims 1 or 2 wherein the heating of the thermoplastic laminate is being maintained along all the formation process to avoid it cooling below the resin melting temperature.

4. A thermoforming apparatus for forming substantially flat composite laminates (10) made up of thermoplastic resin with reinforcing fibers, comprising
• a first element called the mold (30) against which the laminate will be formed,
• a second element (40) configured to locally clamp the laminate (10) against the mold,
• a tension assembly (20) configured to clamp the laminate by two opposite edges and subject it to a regulated tension,
• and ironing devices (50) installed on movable supports
wherein the first element (30) and the second element (40) can move closer or further away one from the other in order to clamp or release the laminate (10), wherein the tension assembly is capable of moving in relation to the mold (30), and wherein the ironing devices (50) are flexible elements that can move relative to the mold (30) to form the laminate against the mold by sliding on its outer surface, and also can exert a regulated pressure on the laminate against the mold while they slide on its surface.

5. The thermoforming apparatus according to claim 4 further comprising heating elements to heat the laminate prior to the forming operation.

6. The thermoforming apparatus according to any of the claims 4 or 5 further comprising temperature sensors to measure the temperature of the laminate (10).

7. The thermoforming apparatus according to any of the claims 4 to 6 further comprising temperature sensors to measure the temperature of the mold (30).

8. The thermoforming apparatus according to any of the claims 4 to 7 further comprising internal heating elements in the mold (30).

9. The thermoforming apparatus according to any of the claims 4 to 8 further comprising internal cooling elements in the mold (30).

10. The thermoforming apparatus according to any of the claims 4 to 9 wherein the ironing devices (50) that press the laminate against the mold (30) are flexible sheets.

11. The thermoforming apparatus according to claim 10 wherein the ironing devices (50) are thin metallic strips.

12. The thermoforming apparatus according to claim 10 wherein the ironing devices (50) are thin thermoset laminates.

13. The thermoforming apparatus according to claim 10 wherein the ironing devices (50) are plastic sheets.

14. The thermoforming apparatus according to any of the claims 4 to 13 further comprising an elastic coupling between the ironing devices and their attachment to the forming apparatus, to allow the ironing devices a high degree of deformation to adapt to high-curvature molds.

15. The thermoforming apparatus according to any of the claims 4 to 9 wherein the ironing devices (50) are rubber elements.
